# EUROPÄISCHE PATENTSCHRIFT

(11) **EP 0 955 344 B1**
(45) Veröffentlichungstag und Bekanntmachung des Hinweises auf die Patenterteilung: **18.06.2003**
(21) Anmeldenummer: 99104747.3
(22) Anmeldetag: 06.03.1999
(51) Int. Cl.: C09C 3/12, C09C 1/02, C09C 1/30, C09C 1/36, C08K 9/06, C09J 11/06

(54) **Oberflächenmodifizierte Füllstoffe, Verfahren zu deren Herstellung sowie deren Verwendung**
Surface modified fillers, process for its preparation and its use
Charges traitées en surface, procédé pour leur préparation et leur utilisation

(30) Priorität: 28.04.1998 DE 19818924
(43) Veröffentlichungstag der Anmeldung: 10.11.1999
(73) Patentinhaber: Degussa AG, 40474 Düsseldorf (DE)
(72) Erfinder: Mack, Helmut, Dr., 79618 Rheinfelden (DE); Barfurth, Dieter, 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Schwörstadt (DE); Monkiewicz, Jaroslaw, Dr., 79618 Rheinfelden (DE); Standke, Burkhard, Dr., 79540 Lörrach (DE)

(56) Entgegenhaltungen:
- DE-A- 19 639 783
- US-A- 3 122 516
- US-A- 5 629 400
- US-A- 5 679 147

## Beschreibung

Die vorliegende Erfindung betrifft oberflächenmodifizierte Füllstoffe und ein Verfahren zur Modifizierung der Oberflächen von Füllstoffen unter Verwendung einer Organosiloxan-haltigen Zusammensetzung auf Wasser-Basis, wobei die Organosiloxane in Wasser löslich sind und neben OH-Gruppen mindestens eine Amino-funktionelle Gruppe und gegebenenfalls mindestens eine weitere funktionelle Gruppe aus der Reihe Alkyl, Halogenalkyl, Alkenyl, Glycidetheralkyl, Acryloxyalkyl sowie Methacryloxyalkyl enthalten und an jedem Siliciumatom eines Organosiloxans eine der Organofunktionelien Gruppen gebunden ist. Ferner betrifft die vorliegende Erfindung die Verwendung der oberflächenmodifizierten Füllstoffe sowie Compounds auf Ethylen-Vinylacetat-Copolymer-Basis.

Im allgemeinen werden Füllstoffe als Zusätze u. a. für Klebstoffe, Dichtungsmassen, Polymermassen, Anstrichfarben, um nur einige zu nennen, verwendet, **z. B. US 3 122 516**. Es handelt sich hierbei in der Regel um anorganische Materialien, wobei man zwischen inaktiven und aktiven Produkten wählen kann. Mit Füllstoffen lassen sich spezifische mechanische und/oder physikalische Eigenschaften der Polymer-Matrix verändern, weshalb sie auch verstärkende Füllstoffe genannt werden. Da die verstärkende Funktion unterschiedlicher Natur sein kann, ist eine Definition nur in Verbindung mit dem jeweilig eingesetzten Polymer möglich. Bei Kautschuk und synthetischen Elastomeren kann man so z. B. die Härte, Festigkeit, Elastizität und Dehnung variieren.

Verstärkende Füllstoffe haben, abgesehen von pyrogener Kieselsäure und Ruß, eine bisher eher untergeordnete Rolle gespielt. Füllstoffe wurden überwiegend als Streckmittel benutzt, um Erzeugnisse preiswerter herstellen zu können. Die Verteuerung der Basispolymere führte zu einem Umdenkprozeß. Heute ist man eher bestrebt, durch gezielte Substitution der Basispolymere mit spezifisch gecoateten Füllstoffen die Kosten/Leistungsbilanz im Gleichgewicht zu halten.

Obwohl vorbehandelte Füllstoffe teurer als ihre konventionellen Arten sind, werden die Preise durch das Coaten nicht so stark belastet, da man mit kleinen Mengen Überzugsmaterial große Effekte und Verbesserungen erzielen kann.

Am Beispiel der Aluminiumhydroxidherstellung sei dies kurz erläutert. Aluminiumhydroxid (ATH), gemahlen oder feinteilig auskristallisiert, wird als Füllstoff und Flammschutzmittel überall dort eingesetzt, wo die Verarbeitungstemperaturen nicht wesentlich über 200 °C liegen. ATH ist halogenfrei, nicht korrosiv, nicht toxisch, physiologisch unbedenklich und mit hoher Effizienz bei der Senkung der Rauchgasdichte.

ATH wird in unterschiedlichen Qualitäten, abgestimmt auf die spezifischen Eigenschaften wichtiger Kunststoffsysteme, angeboten. ATH kann in hohen Füllgraden (50 bis 70 %) in zu vemetzende Elastomere, Thermoplaste und thermoplastische Elastomere, Duromere, PVC, Ethylen-Vinylacetat-Copolymere sowie Dispersionen eingearbeitet werden.

Die Modifizierung von Füllstoffen erfolgt üblicherweise in einem zusätzlichen Arbeitsschritt nach der Trocknung des Minerals bzw. dessen Aufarbeitung durch Mahlen (vgl. Figur 1):

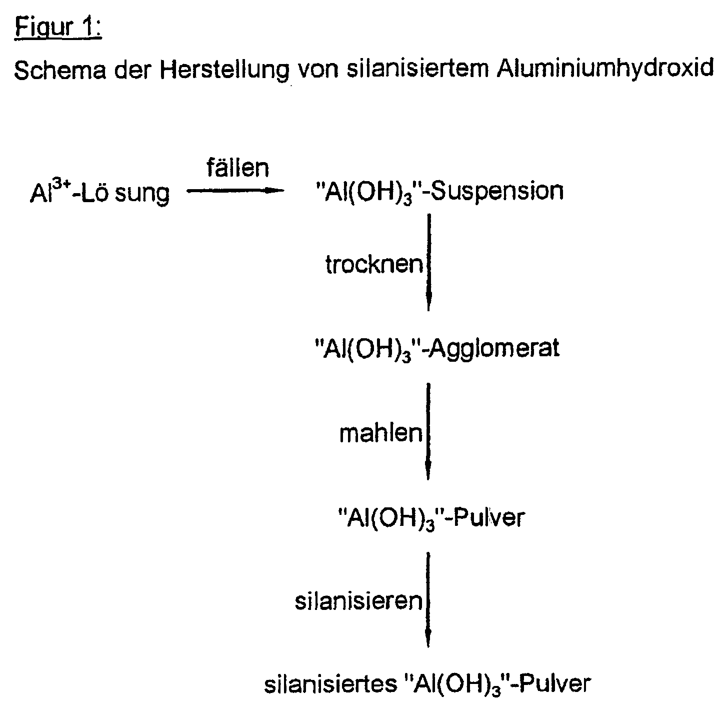

Das Silanisieren wird nach dem Stand der Technik entweder trocken (Aufsprühen des Alkoxysilans in speziellen Mischaggregaten), naß/slurry (Applikation einer wäßrigen oder alkoholischen Silan/Lösungsmittel-Mischung), direkt (Flüssigsilanzugabe während der Compoundierung) oder auch durch Aufsprühen einer Silanemulsion auf den erwärmten Füllstoff durchgeführt.

Zur Aufbereitung werden viele mineralische Füllstoffe nach Abtrennung von Gangart und Verunreinigungen mit Wasser aufgeschlämmt, hydroklassiert und getrocknet.

So ist bekannt, daß man die Oberflächeneigenschaften von Füllstoffen durch eine Behandlung mit Organoalkoxysilanen, Organoalkoxysilanmischungen oder Organoalkoxysilanpolykondensaten, welche gegebenenfalls in organischen Lösemitteln gelöst vorliegen, modifizieren kann (US 5 571 851, EP 0 632 109 A1, EP 0 590 270 A2, EP 0 492 223 A2, WO 90/02 779). Hierbei werden, sofern Wasser oder Hydroxyl-Gruppen zugegeben sind, nicht unerhebliche Mengen an Alkohol durch Hydrolyse freigesetzt. Darüber hinaus sind Verfahren, bei denen organische Lösemittel zugegeben sind, in der Regel nur unter besonderen, meist kostenintensiven Sicherheitsmaßnahmen durchzuführen.

EP 0 716 128 A2, EP 0 716 127 A2, EP 0 675 128 A1 sowie die noch nicht veröffentlichte deutsche Patentanmeldung Nr. 196 39 782.0 offenbaren stabile Zusammensetzungen wasserlöslicher Organosiloxane, die u. a. für die Silanisierung von Füllstoffen Anwendung finden. Solche Wasser-basierenden Systeme setzen jedoch bei Verdünnen mit Wasser keine Alkohole durch Hydrolyse frei.

US 5 543 173 lehrt eine Methode zur Minderung der Agglomerationsneigung anorganischer Pulver, beispielsweise Aluminiumhydroxid, wobei man das Pulver mit einer gegebenenfalls Alkohol-haltigen Lösung behandelt, die Organosiloxane enthält, welche durch Hydrolyse eines Organotrialkoxysilans, beispielsweise einem Vinyltrialkoxysilan, einem Alkyltrialkoxysilan, einem Halogenalkyltrialkoxysilan oder einem Epoxy-, einem Methacryloxy- oder einem Amino-funktionellen Trialkoxysilan, zugänglich sind und der Oligomerisierungsgrad oberhalb 2 und unterhalb des Gelpunkts liegt, und das behandelte Pulver anschließend trocknet. So behandelte Pulver können gemäß US 5 543 173 in Polymerblends eingesetzt werden.

Der vorliegenden Erfindung lag die Aufgabe zugrunde, eine **weitere** Methode bereitzustellen, die es ermöglicht, in einfacher, wirkungsvoller und wirtschaftlicher Weise die Oberfläche von Füllstoffen, insbesondere die von Aluminiumhydroxid, zu modifizieren, **wobei ein entsprechendes Füllstoff/Wassergemisch eine vergleichsweise geringe Viskosität aufweist.**

Die gestellte Aufgabe wird erfindungsgemäß entsprechend den Angaben der Patentansprüche gelöst.

Überraschenderweise wurde gefunden, daß man sowohl Aluminiumhydroxid, insbesondere wie es während seiner Herstellung anfällt und als wäßrige Suspension oder als feuchter Filterkuchen vorliegt, als auch andere mineralische Füllstoffe, insbesondere Silikate, wie Kaolin, Bentonit, Montmorillonit, Talkum, Glimmer, beispielsweise Muskovitglimmer, insbesondere auch Magnesiumhydroxid, Kieselsäure, beispielsweise Fällungskieselsäure, Flammkieselsäure, oder Titandioxid sowie Calciumcarbonat, wie Kreide oder Dolomit, in einfacher und wirtschaftlicher Weise und mit hervorragendem Erfolg bezüglich der Resuspendierbarkeit sowie der Anwendungseigenschaften (insbesondere in Compounds) durch Silanisierung oberflächenmodifizieren kann, wenn man den Füllstoff, sofern er geeigneterweise nicht bereits wasserfeucht oder in einer wäßrigen Suspension vorliegt, mit Wasser mischt und unter guter Durchmischung eine Organosiloxan-haltige Zusammensetzung auf Wasser-Basis zugibt und die erhaltene Mischung trocknet, wobei die vorliegenden Organosiloxane in Wasser löslich sind und neben OH-Gruppen mindestens eine Amino-funktionelle Gruppe und gegebenenfalls mindestens eine weitere funktionelle Gruppe aus der Reihe Alkyl, Halogenalkyl, Alkenyl, Glycidetheralkyl, Acryloxyalkyl sowie Methacryloxyalkyl enthalten und an jedem Siliciumatom eines Organosiloxans eine der Organo-funktionellen Gruppen gebunden ist.

Dabei wird in vorteilhafter Weise eine in der Regel pumpfähige Mischung erhalten, die bevorzugt einen Feststoffgehalt im Bereich zwischen 10 bis 70 Gew.-%, vorzugsweise zwischen 30 bis 60 Gew.-%, bei einer Viskosität im Bereich von 10 bis 20.000 mPa s, vorzugsweise von 20 bis 1.000 mPa s, besonders bevorzugt von 100 bis 600 mPa s, aufweist. Die vorliegende Mischung wird vorzugsweise sprühgetrocknet, wobei der erfindungsgemäße Füllstoff danach in der Regel in vorteilhafter Weise resuspendierbar ist, beispielsweise in Pentan oder Xylol, und darüber hinaus auch praktisch keine Agglomerate festzustellen sind, was beispielsweise bei der Einarbeitung in Compounds einen besonderen Vorteil darstellen kann.

Ferner ist bei Verwendung erfindungsgemäß modifizierter Füllstoffe in Polymermassen eine Verbesserung der Haftung zwischen Füllstoff und Polymer zu verzeichnen. Verbesserte mechanische Eigenschaften und chemische Resistenz der Verbundwerkstoffe können somit hervorzuhebende Vorteile sein. Häufig werden auch Füllstoffe mit farbgebenden Eigenschaften - sogenannte Pigmente, beispielsweise Weißpigment - eingesetzt. Auch solche Füllstoffe mit farbgebenden Eigenschaften können in ebenfalls vorteilhafter Weise erfindungsgemäß behandelt und verwendet werden.

Die erfindungsgemäße Oberflächenmodifzierung kann bei Füllstoffen bzw. Pigmenten zu einer vorteilhaften Beeinflussung der rheologischen Eigenschaften durch Änderung der Benetzung, Dispersion, Viskosität, Thixotropie und des Fließverhaltens im Bindemittel führen.

Gegenstand der vorliegenden Erfindung sind somit oberflächenmodifizierte Füllstoffe **für Klebstoffe, Dichtmassen, Compounds, Polymermassen, Farben und Lacke, ausgenommen modifizierte Perlglanzpigmente für Wasserlacksysteme**, die erhältlich sind durch
- Mischen eines Füllstoffs mit Wasser und
- Zugabe einer Organosiloxan-haltigen Zusammensetzung auf Wasser-Basis unter guter Durchmischung, wobei die Organosiloxane in Wasser löslich sind und neben OH-Gruppen mindestens eine Amino-funktionelle Gruppe und gegebenenfalls mindestens eine weitere funktionelle Gruppe aus der Reihe Alkyl, Halogenalkyl, Alkenyl, Glycidetheralkyl, Acryloxyalkyl sowie Methacryloxyalkyl enthalten und an jedem Siliciumatom eines Organosiloxans eine der Organo-funktionellen Gruppen gebunden ist,
- und Trocknen der Mischung.

Vorzugsweise sind in der für die erfindungsgemäße Silanisierung verwendeten Organosiloxan-haltigen Zusammensetzung auf Wasser-Basis Organosiloxane enthalten, welche als funktionelle Gruppen im wesentlichen (i) Aminoalkyl-Gruppen oder (ii) Aminoalkyl- und Alkyl-Gruppen oder (iii) Aminoalkyl- und Vinyl-Gruppen tragen, besonders bevorzugt sind Organosiloxane, die 3-Aminopropyl-Gruppen als mindestens eine der funktionellen Gruppen enthalten.

Erfindungsgemäße, oberflächenmodifizierte Füllstoffe sind vorzugsweise Aluminiumhydroxid, Magnesiumhydroxid, Kreide, Dolomit, Talkum, Kaolin, Bentonit, Montmorillonit, Glimmer, Kieselsäure sowie Titandioxid.

Ferner ist Gegenstand der vorliegenden Erfindung ein Verfahren zur Modifizierung der Oberfläche von Füllstoffen unter Verwendung einer Organosiloxan-haltigen Zusammensetzung auf Wasser-Basis, wobei die Organosiloxane in Wasser löslich sind und neben OH-Gruppen mindestens eine Amino-funktionelle Gruppe und gegebenenfalls mindestens eine weitere funktionelle Gruppe aus der Reihe Alkyl, Halogenalkyl, Alkenyl, Glycidetheralkyl, Acryloxyalkyl sowie Methacryloxyalkyl enthalten und an jedem Silicium eines Organosiloxans eine der Organo-funktionellen Gruppen gebunden ist, das dadurch gekennzeichnet ist, daß man den Füllstoff mit Wasser mischt, unter guter Durchmischung die Organosiloxan-haltige Zusammensetzung auf Wasser-Basis zusetzt und die Mischung trocknet, **wobei die Mischung, bevor sie der Trocknung zugeführt wird, eine Viskosität von 10 bis 20.000 mPa s bei einem Gehalt an Füllstoff von 10 bis 70 Gew.-% aufweist.**

An dieser Stelle sei besonders darauf hingewiesen, daß man beim erfindungsgemäßen Verfahren beispielsweise solche Organosiloxan-haltigen Zusammensetzungen auf Wasser-Basis einsetzen kann, wie sie aus EP 0 716 127 A2, EP 0 716 128 A2, EP 0 675 128 A1, der noch nicht veröffentlichten deutschen Patentanmeldung Nr. 196 39 782.0 und der Parallelanmeldung mit dem Titel "Stabile Zusammensetzungen wasserlöslicher, Amino- und Alkenyl-funktioneller Organosiloxane, Verfahren zu ihrer Herstellung und ihre Verwendung" hervorgehen. Ferner ist in den zuvorgenannten Schutzrechten die Herstellung besagter Organosiloxanhaltiger Zusammensetzungen beschrieben.

Insbesondere verwendet man beim erfindungsgemäßen Verfahren eine Organosiloxan-haltige Zusammensetzung auf Wasser-Basis mit einem Gehalt an Organosiloxan von 10 bis 150 g Si/kg Lösung, vorzugsweise 60 bis 130 g/kg, besonders bevorzugt 90 bis 120 g/kg.

Bevorzugt ist ferner, daß man eine Organosiloxan-haltige Zusammensetzung auf Wasser-Basis mit einem pH-Wert von 2 bis 6 oder 7,5 bis 12, besonders bevorzugt von 3 bis 5 oder 10 bis 12, verwendet.

Das erfindungsgemäße Verfahren ist insbesondere ökonomisch und ökologisch vorteilhaft, wenn man eine Organosiloxan-haltige Zusammensetzung auf Wasser-Basis mit einem Gehalt an Alkoholen von weniger als 0,5 Gew.-%, vorzugsweise weniger als 0,1 Gew.-%, verwendet, so daß auf Anlagenteile mit besonderen Sicherheitsanforderungen aufgrund einer möglichen Freisetzung von Hydrolysealkoholen weitgehend verzichtet werden kann und darüber hinaus die Abluftströme nicht zusätzlich von hohen VOC-Gehalten (VOC = Volatile Organic Compounds) befreit werden müssen.

Im allgemeinen führt man das erfindungsgemäße Verfahren derart aus, daß man den zu behandelnden Füllstoff mit Wasser mischt und eine Organosiloxan-haltige Zusammensetzung der oben beschriebenen Art unter guter Durchmischung zusetzt. Bereits nach kurzer Zeit zeigt die resultierende Mischung in der Regel eine drastische Viskositätserniedrigung.

Vorzugsweise setzt man beim erfindungsgemäßen Verfahren an Organosiloxan 0,1 bis 12 Gew.-% pro kg zu silanisierendem Produkt ein, wobei die resultierende Mischung, bevor sie einer Trocknung zugeführt wird, geeigneterweise eine Viskosität von 10 bis 20.000 mPa s bei einem Gehalt an Füllstoff von 10 bis 70 Gew.-% aufweist.

Die so erhaltene Mischung ist im allgemeinen trotz eines vergleichsweise geringen Wasseranteils pumpfähig und kann nun einer Trocknung zugeführt werden. Die Trocknung erfolgt vorzugsweise bei einer Temperatur im Bereich von 40 bis 120 °C, vorzugsweise von 80 bis 110 °C.
Man kann aber auch die Mischung vor der Trocknung filtrieren und anschließend den Filterrückstand einer Trocknung zuführen, beispielsweise einer Bandtrocknung.

Bevorzugt führt man beim erfindungsgemäßen Verfahren die Trocknung der Mischung unter Zuhilfenahme eines Sprühtrockners durch.

Geeigneterweise kann das erfindungsgemäße Verfahren in Verfahren zur Herstellung bzw. Aufbereitung von Füllstoffen integriert werden.

So kann bei der eingangs beschriebenen Herstellung von Aluminiumhydroxid, vgl. Figur 1, die Organosiloxan-haltige Zusammensetzung der "Al(OH)₃"-Suspension zugesetzt und anschließend mittels Bandtrockner oder vorzugsweise mittels Sprühtrockner getrocknet werden, wobei die Mahlung als energieintensive Verfahrensstufe entfallen kann. Darüber hinaus kann auch die bisher notwendige zusätzliche Verfahrensstufe der Silanisierung nach dem Stand der Technik entfallen.

Der erfindungsgemäß erhaltene Füllstoff kann darüber hinaus einer Kornfraktionierung zugeführt werden, ist bevorzugt jedoch bereits nach der Trocknungsstufe in seiner vorteilhaften Weise verwendbar, beispielsweise in Polymercompounds.

Polymercompounds sind verarbeitungsfertige Mischungen von Polymeren mit verschiedenen Additiven, z. B. Alterungsschutzmittel, Antioxidantien, Antistatika, Flammschutzmitteln, Füllstoffen, Vulkanisationshilfsmitteln oder Weichmachern, die für die Herstellung der Endprodukte erforderlich sind (nach ASTM D-883).

Gegenstand der vorliegenden Erfindung ist daher auch die Verwendung von oberflächenmodifizierten erfindungsgemäßen Füllstoffen für Klebstoffe, Dichtmassen, Polymermassen, beispielsweise hochtemperaturvernetzender Siliconkautschuk (HTV-Massen), Farben und Lacke.

Vorzugsweise werden die oberflächenmodifizierten erfindungsgemäßen Füllstoffe für die Herstellung von Compounds auf Ethylen-Vinylacetat-Copolymer-Basis verwendet.

Die erfindungsgemäßen Füllstoffe weisen auch hierbei unerwartete vorteilhafte Eigenschaften auf. So kann bei Anwendung erfindungsgemäß silanisierter Füllstoffe in Ethylen-Vinylacetat-Systemen, insbesondere bei Verwendung von erfindungsgemäß, beispielsweise mit DYNASYLAN® HS 2907 modifiziertem Aluminiumhydroxid, eine deutliche Verbesserung der Zugfestigkeit und in vorteilhafter Weise eine reduzierte Wasseraufnahme im Vergleich zu einem nicht silanisierten Füllstoff festgestellt werden.

Gegenstand der vorliegenden Erfindung sind daher auch Compounds auf Ethylen-Vinylacetat-Copolymer-Basis, die erfindungsgemäß oberflächenmodifizierte Füllstoffe enthalten.

Die vorliegende Erfindung wird durch die nachfolgenden Beispiele näher erläutert. (Hinweis: Für DYNASYLAN® wird nachfolgend auch die Abkürzung DS verwendet.)

### Beispiele

### - Organosiloxan-haltige Zusammensetzungen auf Wasser-Basis

### Beispiel 1

DYNASYLAN® HS 1152 ist ein vollständig hydrolysiertes, wasserbasierendes Organopolysiloxan-System mit einem pH-Wert von 11 und 50,49 g Si/kg Lösung, wobei man für die Herstellung von 3-Aminopropyltrialkoxysilan (AMEO) ausgeht.

### Beispiel 2

DYNASYLAN® HS 2906 ist ebenfalls ein vollständig hydrolysiertes, wasserbasierendes Organopolysiloxan-System mit einem pH-Wert von 4 und 28,52 g Si/kg Lösung, wobei man für die Herstellung von AMEO und PTMO (Propyltrimethoxysilan) im Verhältnis von 1 : 1 ausgeht.

### Beispiel 3

DYNASYLAN® HS 2781 ist auch ein vollständig hydrolysiertes, wasserbasierendes Organopolysiloxan-System mit einem pH-Wert von 10 bis 11 und 51,12 g Si/kg Lösung, wobei man für die Herstellung von AMEO und VTMO (Vinyltrimethoxysilan) im Verhältnis von 2,5 : ausgeht.

### Beispiel 4

DYNASYLAN® HS 2907 ist auch ein vollständig hydrolysiertes, wasserbasierendes Organopolysiloxan-System mit einem pH-Wert von 4 und 119,38 g Si/kg Lösung, wobei man für die Herstellung von AMEO und VTMO im Verhältnis von 1 : 1 ausgeht.

### Vergleichsbeispiel A

Als Vergleichssbustanz für Organosiloxan-haltige Zusammensetzungen auf Wasser-Basis wurde DYNASYLAN® AMEO (126,49 g Si/kg, 4,5 mol Si/kg) eingesetzt.

### - Viskositätserniedrigung

### Beispiel 5

Einer 60%igen wäßrigen "Kreide-Paste" wurde 1 Gew.-% DYNASYLAN® HS 2907 zugegeben. Es wurde eine drastische Viskositätserniedrigung auf weniger als 6 % der Anfangsviskosität beobachtet. Das filtrierte und bei 110°C getrocknete Produkt läßt sich in Pentan gut suspendieren, während unbehandelte Kreide "Klumpen" bildet.

### Vergleichsbeispiel B

500 g Aluminiumhydroxid, nachfolgend kurz ATH genannt, (Martinal® 0L-107) und 500 g VE-Wasser werden mit einem Hochleistungsrührer innig zu einer Paste vermischt, unter Rühren 1 Gew.-% DYNASYLAN® HS 2781 (aus Beispiel 3), bezogen auf ATH, portionsweise zugegeben und jeweils nach einer Zeit von 3 Minuten mit Hilfe eines Brookfield-Viskosimeters (Rotationsviskosimeter RVT, Spindel 5/6) die Viskosität gemessen, vgl. Tabelle 1.

### Beispiel 6

Das Vergleichsbeispiel B wird in entsprechender Weise unter Einsatz von DYNASYLAN® HS 2907 (aus Beispiel 4) wiederholt, vgl. Tabelle 1.

Der Vergleich zeigt, daß die Viskosität der anfänglichen ATH-Paste bereits durch vergleichsweise geringe Mengen des erfindungsgemäßen DYNASYLAN® HS 2907 gegenüber DYNASYLAN® HS 2781 in sehr wirkungsvoller und anschaulicher Weise gesenkt werden kann.

Im Auflichtmikroskop sind sowohl bei filtrierten (im Anschluß getrocknet bei 110 °C im Trockenschrank) sowie bei sprühgetrockneten DYNASYLAN®-HS-2907-ATH-Proben dispergierte Eigenschaften sichtbar. Eine Agglomeratbildung zu Sekundärteilchen wie beim unbehandelten ATH bleibt aus.

Die gute Dispergierfähigkeit zeigt sich besonders in unpolaren Lösungsmitteln, wie Pentan und Xylol. Die Schüttdichte des "sprühgetrockneten ATH" ist im Vergleich zum "filtrierten und getrockneten ATH" wesentlich geringer (25 g/100 ml zu 25 g/25 ml) und entspricht dem unbehandelten ATH-Ausgangsmaterial.

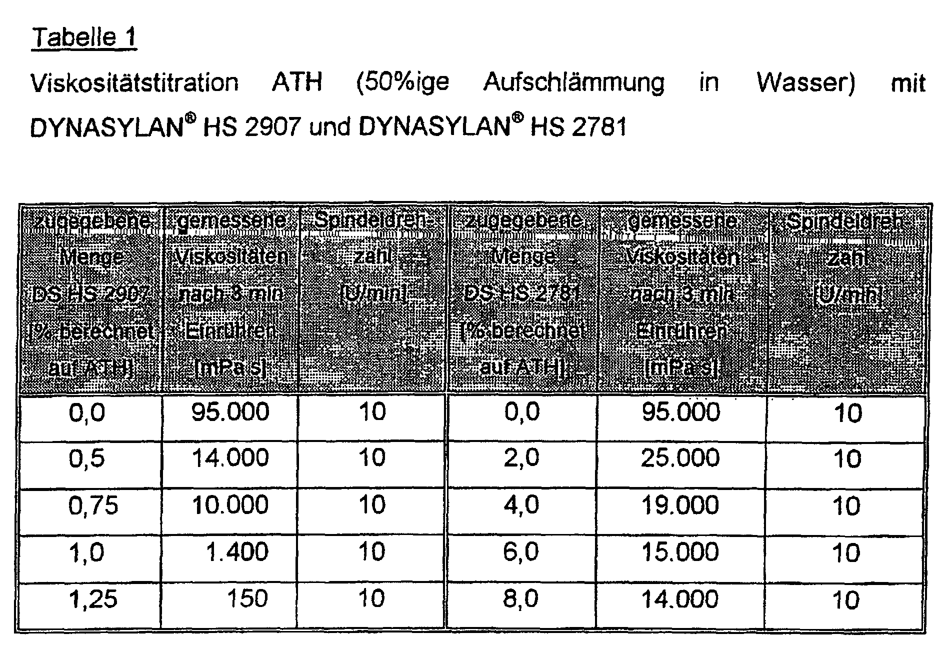

### Vergleichsbeispiel C

Das Vergleichsbeispiel B wird in entsprechender Weise unter Einsatz von Kreide (OMYALITE® 50) wiederholt, vgl. Tabelle 2.

### Beispiel 7

Das Vergleichsbeispiel C wird in entsprechender Weise unter Einsatz von DYNASYLAN® HS 2907 (aus Beispiel 1) wiederholt, vgl. Tabelle 2).

Auch hier zeigt sich bereits nach wenigen Minuten eine signifikante Viskositätserniedrigung. Die anfängliche "Kreide-Paste" wird bereits nach Zugabe vergleichsweise geringer Mengen an DYNASYLAN® HS 2907 dünnflüssig, läßt sich ohne Probleme pumpen und im Laborsprühtrockner trocknen.

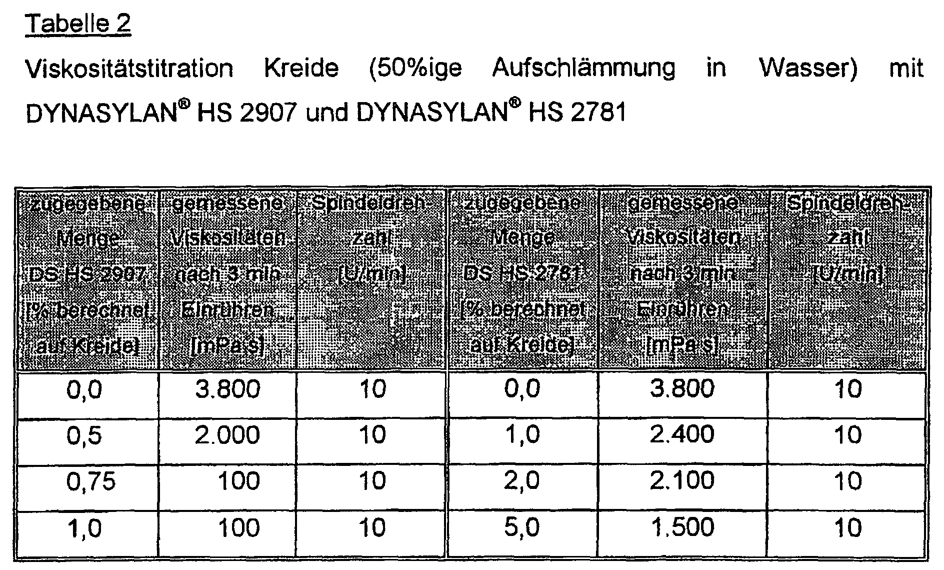

### - Partikelgrößenverteilung

### Beispiel 8

Die Analysen der Partikelgrößenverteilungen (Suspendierhilfsmittel Ethanol, 50 sec Ultraschallbehandlung) von mit 1 Gew.-% DYNASYLAN® HS 2907 behandeltem ATH, mit 3,5 Gew.-% DYNASYLAN® HS 2907 behandeltem MDH und mit 1 Gew.-% DYNASYLAN® HS 2907 behandelter Kreide faßt Tabelle 3 zusammen.

Die Proben wurden nach DYNASYLAN®-HS-Behandlung filtriert und 24 Stunden bei 110 °C in Schalen aus Pozellan getrocknet.

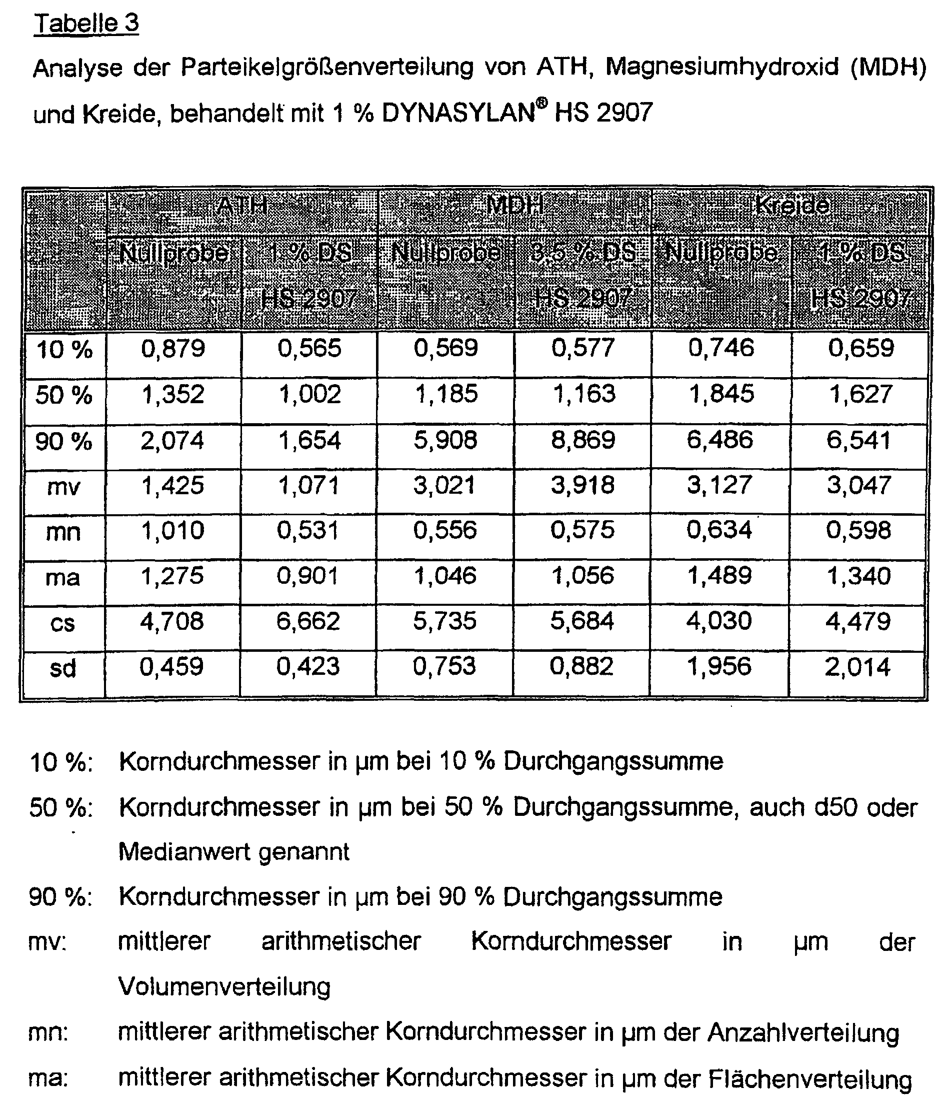

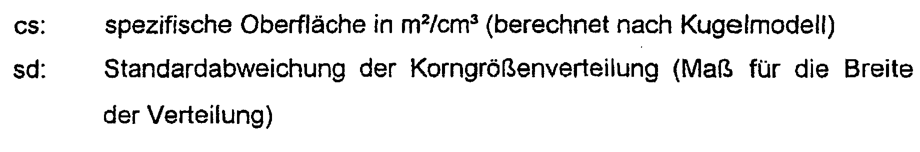

Mit DYNASYLAN® HS 2907 behandeltes ATH zeigt eine Verschiebung des d50 Medianwerts von 1,35 µm (unbehandeltes ATH) nach 1,00 µm. Der Zerfall der Agglomerate in Primärteilchen ist bei mit DYNASYLAN® HS 2907 behandeltem ATH bevorzugt zu beobachten.

### - Compoundierung der Füllstoffe in Ethylen-Vinylacetat-Copolymer (EVA)

### Beispiel 9

Die Einarbeitung der mit DYNASYLAN®-HS-oberflächenbehandelten Füllstoffe erfolgte in EVA. Hierfür wurden 40 Teile Exxon Escorene UL 00119 (EVA mit 19 % Vinylacetatgehalt) und 60 Teile ATH vorgemischt. Geknetet wurde jeweils 15 Minuten bei 180 °C in der Knetkammer (Haake Meßkneter). Aus dem Compound wurden Platten gepreßt (190 °C/Abstandhalter 2 mm) und daraus Prüfstäbe (nach DIN 53 504 Normstab S2) gestanzt.

Gemessen wurden mechanische Eigenschaften (Zugversuche nach DIN EN ISO 527-1 bis 3, Zwick Universalprüfmaschine 1445). Tabelle 4 faßt die Ergebnisse zusammen.

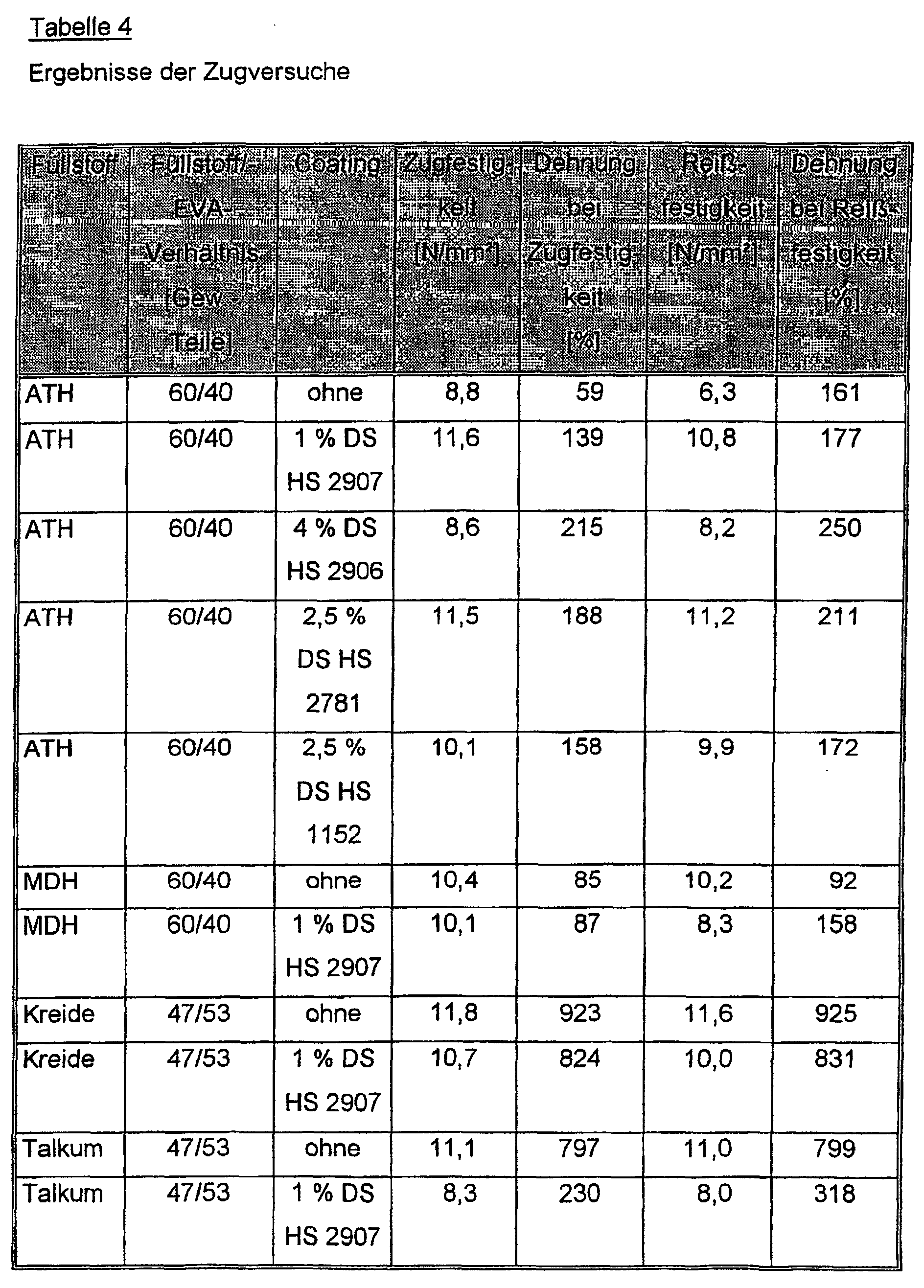

Die Zugfestigkeit ist der Maximalwert im Kraft/Dehnungs-Diagramm. Bei ATHgefüllten EVA-Compounds führt die Oberflächenbehandlung mit DYNASYLAN®-HS-Systemen zu höheren Zug- und Reißfestigkeiten und höheren Dehnwerten. Die Dehnwerte bei Zugfestigkeit und Reißfestigkeit nähern sich bei gecoatetem ATH einander an.

Der Füllstoffhabitus hat bei Talkum (Phyllosilicat mit Blättchenstruktur) einen erheblichen Einfluß auf die Prüfergebnisse.

### - Wasseraufnahme

### Beispiel 10

Die Wasseraufnahme der gefüllten Compounds wurden in Anlehnung an DIN EN 60811-1 und 3 bestimmt. Tabelle 5 faßt die Ergebnisse zusammen.

Hierzu wurden Probekörper (0,5 bis 1,5 g) in 50 ml vollentsalztes Wasser gelegt und bei Taumtemperatur gelagert. Die Gewichtszunahme wurde nach bestimmten Zeitabständen durch Wiegen bestimmt.

Compounds, die oberflächenbehandelten Füllstoff enthalten, weisen eine im Vergleich zu nichtsilanisiertem Füllstoff reduzierte Wasseraufnahme auf (Ausnahme MDH).

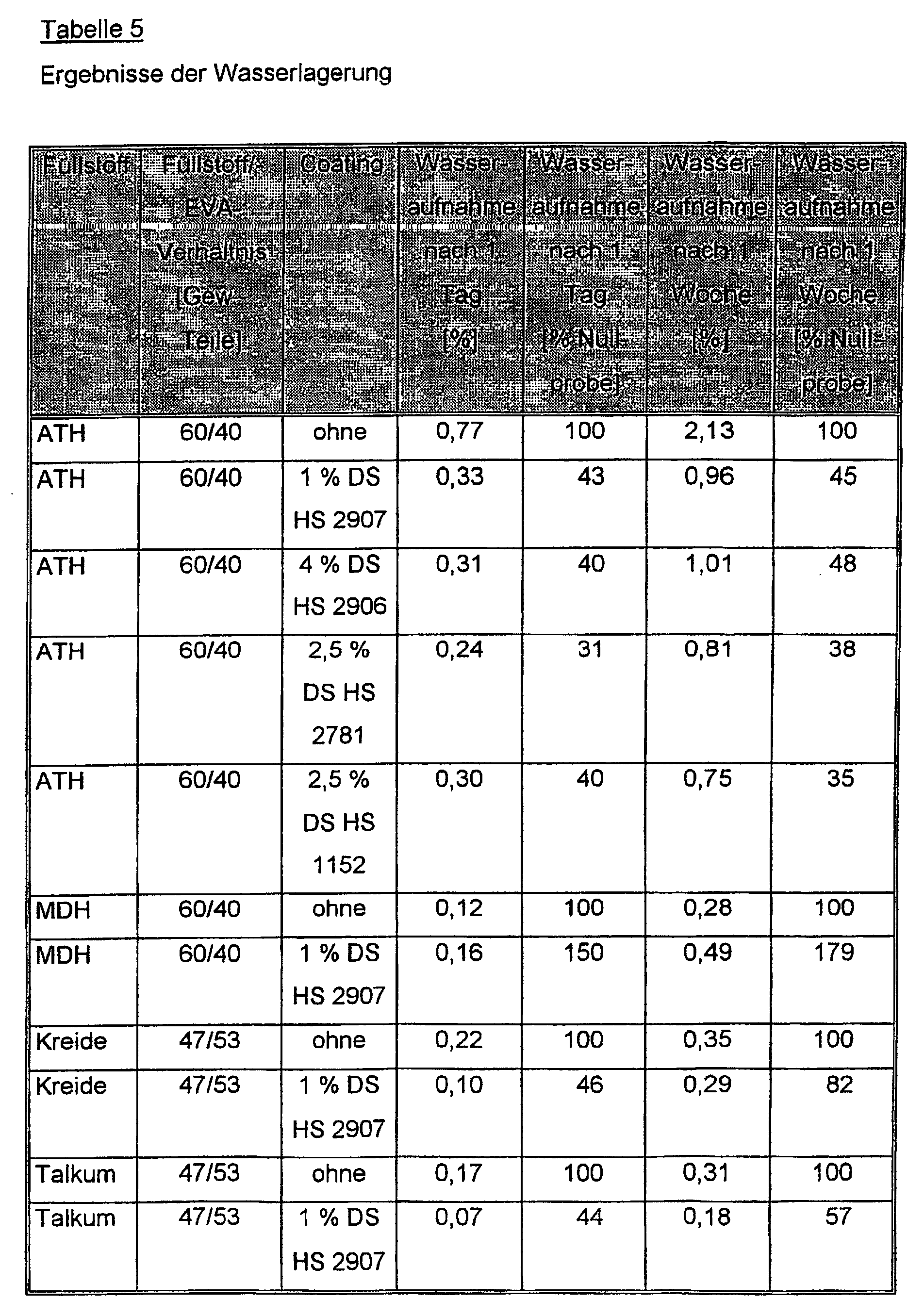

## Patentansprüche

1. Oberflächenmodifizierte Füllstoffe **für Klebstoffe, Dichtmassen, Compounds, Polymermassen, Farben und Lacke, ausgenommen modifizierte Perlglanzpigmente für Wasserlacksysteme,** erhältlich durch
- Mischen eines Füllstoffs mit Wasser und
- Zugabe einer Organosiloxan-haltigen Zusammensetzung auf Wasser-Basis unter guter Durchmischung, wobei die Organosiloxane in Wasser löslich sind und neben OH-Gruppen mindestens eine Amino-funktionelle Gruppe und gegebenenfalls mindestens eine weitere funktionelle Gruppe aus der Reihe Alkyl, Halogenalkyl, Alkenyl, Glycidetheralkyl, Acryloxyalkyl sowie Methacryloxyalkyl enthalten und an jedem Siliciumatom eines Organosiloxans eine der Organo-funktionellen Gruppen gebunden ist,
- und Trocknen der Mischung.

2. Oberflächenmodifizierte Füllstoffe nach Anspruch 1,
**dadurch gekennzeichnet,**
**daß** in der für die Silanisierung verwendeten Organosiloxan-haltigen Zusammensetzung auf Wasser-Basis Organosiloxane enthalten sind, welche als funktionelle Gruppen im wesentlichen (i) Aminoalkyl-Gruppen oder (ii) Aminoalkyl- und Alkyl-Gruppen oder (iii) Aminoalkyl- und Vinyl-Gruppen tragen.

3. Oberflächenmodifizierte Füllstoffe nach Anspruch 2,
**dadurch gekennzeichnet,**
**daß** die Organosiloxane 3-Aminopropyl-Gruppen enthalten.

4. Oberflächenmodifiziertes Aluminiumhydroxid, Magnesiumhydroxid, Dolomit, Kreide, Talkum, Kaolin, Bentonit, Montmorillonit, Glimmer, Kieselsäure oder Titandioxid nach mindestens einem der Ansprüche 1 bis 3.

5. Verfahren zur Modifizierung der Oberfläche von Füllstoffen unter Verwendung einer Organosiloxan-haltigen Zusammensetzung auf Wasser-Basis, wobei die Organosiloxane in Wasser löslich sind und neben OH-Gruppen mindestens eine Amino-funktionelle Gruppe und gegebenenfalls mindestens eine weitere funktionelle Gruppe aus der Reihe Alkyl, Halogenalkyl, Alkenyl, Glycidetheralkyl, Acryloxyalkyl sowie Methacryloxyalkyl enthalten und an jedem Silicium eines Organosiloxans eine der Organo-funktionellen Gruppen gebunden ist, nach mindestens einem der Ansprüche 1 bis 4,
**dadurch gekennzeichnet,**
**daß** man den Füllstoff mit Wasser mischt, unter guter Durchmischung die Organosiloxan-haltige Zusammensetzung auf Wasser-Basis zusetzt und die Mischung trocknet, **wobei die Mischung, bevor sie der Trocknung zugeführt wird, eine Viskosität von 10 bis 20.000 mPa s bei einem Gehalt an Füllstoff von 10 bis 70 Gew.-% aufweist.**

6. Verfahren nach Anspruch 5,
**dadurch gekennzeichnet,**
**daß** man eine Organsiloxan-haltige Zusammensetzung auf Wasser-Basis mit einem Gehalt an Organosiloxan von 10 bis 150 g Si/kg Lösung verwendet.

7. Verfahren nach Anspruch 5 oder 6,
**dadurch gekennzeichnet,**
**daß** man eine Organosiloxan-haltige Zusammensetzung auf Wasser-Basis mit einem pH-Wert von 2 bis 6 oder 7,5 bis 12 verwendet.

8. Verfahren nach Anspruch 5 oder 7,
**dadurch gekennzeichnet,**
**daß** man eine Organosiloxan-haltige Zusammensetzung auf Wasser-Basis mit einem Gehalt an Alkoholen von weniger als 0,5 Gew.-% verwendet.

9. Verfahren nach mindestens einem der Ansprüche 5 bis 8,
**dadurch gekennzeichnet,**
**daß** man an Organosiloxan 0,1 bis 12 Gew.-% pro kg zu silanisierendem Füllstoff einsetzt.

10. Verfahren nach mindestens einem der Ansprüche 5 bis 9,
**dadurch gekennzeichnet,**
**daß** man die Trocknung der Mischung unter Zuhilfenahme eines Sprühtrockners durchführt.

11. Verwendung oberflächenmodifizierter Füllstoffe nach den Ansprüchen 1 bis **4 oder einem solchen Füllstoff, der nach mindestens einem der Ansprüche 5 bis 10 hergestellt wurde,** für Klebstoffe, Dichtmassen, Polymermassen, Farben und Lacke.

12. Verwendung oberflächenmodifizierter Füllstoffe nach den Ansprüchen 1 bis **4 oder einem solchen Füllstoff, der nach mindestens einem der Ansprüche 5 bis 10 hergestellt wurde,** für die Herstellung von Compounds auf Ethylen-Vinylacetat-Copolymer-Basis.

13. Compounds auf Ethylen-Vinylacetat-Copolymer-Basis, die oberflächenmodifizierte Füllstoffe nach den Ansprüchen 1 bis **4 oder einem solchen Füllstoff, der nach mindestens einem der Ansprüche 5 bis 10 hergestellt wurde,** enthalten.

## Claims

1. A surface-modified filler for adhesives, sealants, compounds, polymer compositions, paints and surface coatings, excluding modified pearlescent pigments for water-based coating systems, obtainable by
- mixing a filler with water and
- adding a water-based organosiloxane-containing composition with very thorough mixing, the organosiloxanes being soluble in water and containing, in addition to OH groups, at least one amino-functional group and optionally at least one other functional group from the series consisting of alkyl, haloalkyl, alkenyl, glycidyl ether alkyl, acryloxyalkyl and methacryloxyalkyl, and one of the organofunctional groups being bonded to each silicon atom of an organosiloxane,
- and drying the mixture.

2. A surface-modified filler according to claim 1, **characterized in that** the water-based organosiloxane-containing composition used for the silanization comprises organosiloxanes whose functional groups are essentially (i) aminoalkyl groups or (ii) aminoalkyl and alkyl groups or (iii) aminoalkyl and vinyl groups.

3. A surface-modified filler according to claim 2, **characterized in that** the organosiloxanes contain 3-aminopropyl groups.

4. A surface-modified aluminium hydroxide, magnesium hydroxide, dolomite, chalk, talc, kaolin, bentonite, montmorillonite, mica, silica or titanium dioxide according to at least one of claims 1 to 3.

5. A process for the modification of the surface of a filler using a water-based organosiloxane-containing composition, the organosiloxanes being soluble in water and containing, in addition to OH groups, at least one amino-functional group and optionally at least one other functional group from the series consisting of alkyl, haloalkyl, alkenyl, glycidyl ether alkyl, acryloxyalkyl and methacryloxyalkyl, and one of the organofunctional groups being bonded to each silicon of an organosiloxane, according to at least one of claims 1 to 4, **characterized in that** the filler is mixed with water, the water-based organosiloxane-containing composition is added with very thorough mixing, and the mixture is dried, where the mixture, before it is dried, has a viscosity of from 10 to 20,000 mPa s at a filler content of from 10 to 70% by weight.

6. A process according to claim 5, **characterized in that** a water-based organosiloxane-containing composition having an organosiloxane content of from 10 to 150 g of Si/kg of solution is used.

7. A process according to claim 5 or 6, **characterized in that** a water-based organosiloxane-containing composition having a pH of from 2 to 6 or from 7.5 to 12 is used.

8. A process according to claim 5 or 7, **characterized in that** a water-based organosiloxane-containing composition having an alcohol content of less than 0.5% by weight is used.

9. A process according to at least one of claims 5 to 8, **characterized in that** from 0.1 to 12% by weight of organosiloxane is used per kg of filler to be silanized.

10. A process according to at least one of claims 5 to 9, **characterized in that** the mixture is dried using a spray drier.

11. The use of a surface-modified filler according to any of claims 1 to 4 or such a filler as has been prepared according to at least one of claims 5 to 10, for adhesives, sealants, polymer compositions, paints and surface coatings.

12. The use of a surface-modified filler according to any of claims 1 to 4 or such a filler as has been prepared according to at least one of claims 5 to 10, for the preparation of compounds based on ethylene-vinyl acetate copolymer.

13. A compound based on ethylene-vinyl acetate copolymer which contains a surface-modified filler according to any of claims 1 to 4 or such a filler as has been prepared according to at least one of claims 5 to 10.

## Revendications

1. Substances de charge à surfaces modifiées pour adhésifs, masses d'étanchéité, mélanges, masses de polymères, couleurs et laques, excepté des pigments à éclat nacré modifiés, pour systèmes de laques à l'eau, accessibles par
- mélange d'une substance de charge avec de l'eau et
- addition d'une composition contenant un organosiloxane à base d'eau tout en mélangeant bien, les organosiloxanes étant solubles dans l'eau et contenant en plus des groupes OH au moins un autre groupe fonctionnel choisi dans la série des alkyle, halogénoalkyle, alkényle, glycidylétheralkyle, acryloxyalkyle, ainsi que méthacryloxyalkyle, et dont un des groupes organofonctionnels est lié sur chaque atome de silicium d'un organosiloxane,
- et séchage du mélange.

2. Substances de charge à surfaces modifiées selon la revendication 1,
**caractérisées en ce que**
dans la composition contenant un organosiloxane utilisé pour la silanisation, à base d'eau, des organosiloxanes sont présents et portent comme groupes fonctionnels pour l'essentiel
i) des groupes aminoalkyle ou
ii) des groupes aminoalkyle et alkyle ou
iii) des groupes aminoalkyle et vinyle.

3. Substances de charge dont les surfaces ont été modifiées selon la revendication 2,
**caractérisées en ce que**
les organosiloxanes renferment des groupes 3-aminopropyle.

4. Hydroxyde d'aluminium, hydroxyde de magnésium, dolomite, craie, talc, kaolin, tentonite, montmorillonite, mica, acide silicique, ou dioxyde de titane dont la surface a été modifiée selon au moins une des revendications 1 à 3.

5. Procédé de modification des surfaces de substances de charge en utilisant une composition ou contenant un organosiloxane à base d'eau, dans laquelle les organosiloxanes sont solubles dans l'eau et contiennent à côté des groupes OH, au moins un groupe aminofonctionnel et éventuellement au moins un autre groupe fonctionnel choisi dans la série des alkyle, halogénoalkyle, alkényle, glycidyléthéralkyle, acryloxyalkyle ainsi que méthacryloxyalkyle et un des groupes organofonctionnels est lié sur chaque silicium d'un organosiloxane, selon au moins une des revendications 1 à 4,
**caractérisé en ce que**
on mélange la substance de charge avec de l'eau, on ajoute tout en mélangeant bien la composition contenant un organosiloxane à base d'eau et on sèche le mélange, dans lequel le mélange avant d'être amené au séchage, possède une viscosité de 10 à 20.000 mPa.s pour une teneur en substance de charge de 10 à 70 % en poids.

6. Procédé selon la revendication 5,
**caractérisé en ce qu'**
on utilise une composition contenant un organopolysiloxane à base d'eau, ayant une teneur en organosiloxane de 10 à 150 g de Si/kg de solution.

7. Procédé selon la revendication 5 ou 6,
**caractérisé en ce qu'**
on utilise une composition contenant un organosiloxane à base d'eau, ayant une valeur de pH de 2 à 6 ou de 7,5 à 12.

8. Procédé selon la revendication 5 ou 7,
**caractérisé en ce qu'**
on utilise une composition contenant un organosiloxane à base d'eau, ayant une teneur en alcools de moins de 0,5 % en poids.

9. Procédé selon au moins une des revendications 5 à 8,
**caractérisé en ce qu'**
on met en oeuvre en organosiloxane de 0,1 à 12 % en poids par kg de substance de charge à silaniser.

10. Procédé selon au moins une des revendications 5 à 9,
**caractérisé en ce qu'**
on effectue le séchage du mélange à l'aide d'un séchoir par pulvérisation.

11. Utilisation de substances de charge à surfaces modifiées selon les revendications 1 à 4, ou d'une substance de charge préparée selon au moins l'une des revendications 5 à 10, pour la production d'adhésifs de masses d'étanchéité, de masses de polymères, de couleurs et de laques.

12. Utilisation de substances de charge à surfaces modifiées selon les revendications 1 à 4, ou d'une substance de charge préparée selon au moins l'une des revendications 5 à 10, pour la production de mélanges à base de copolymère éthylène-acétate de vinyle.

13. Mélanges à base de copolymère éthylène-acétate de vinyle qui renferment des substances de charge à surfaces modifiées selon les revendications 1 à 4 ou une substance de charge préparée selon au moins l'une des revendications 5 à 10.
